# EUROPÄISCHE PATENTANMELDUNG

(11) **EP 4 613 513 A1**
(43) Veröffentlichungstag der Anmeldung: **10.09.2025**
(21) Anmeldenummer: 25157434.9
(22) Anmeldetag: 12.02.2025
(51) Int. Cl.: B60G 17/056, B60G 11/26, B60G 17/04, B60G 21/067, B60G 21/073

(54) **VENTIL**

(30) Priorität: 07.03.2024 DE 102024000759
(71) Anmelder: Hydac Mobilhydraulik GmbH, Sulzbach/Saar (DE)
(72) Erfinder: Anton, Marc, 66333 Völklingen (DE)
(74) Vertreter: Bartels und Partner, Patentanwälte

(57) **Zusammenfassung**

2. Ventil, zumindest bestehend aus einem Ventilgehäuse (26) und einem darin verfahrbar geführten Ventilschieber (28), der einzelne Fluidanschlussstellen im Ventilgehäuse (26) ansteuert, die nach einem vorgebbaren Verteilungsplan im Ventilgehäuse (26) angeordnet sind, dadurch gekennzeichnet, dass zwischen
- einem ersten Druckversorgungsanschluss (P1) und einem benachbart angeordneten Rücklaufanschluss (T1) ein erster Nutzanschluss (R1),
- dem ersten Druckversorgungsanschluss (P1) und einem weiteren Druckversorgungsanschluss (P2) ein zweiter Nutzanschluss (R2), und
- dem zweiten Druckversorgungsanschluss (P2) und einem weiteren benachbart angeordneten Rücklaufanschluss (T2) der erste Nutzanschluss (R1) vorhanden ist.

## Beschreibung

Die Erfindung betrifft ein Ventil, zumindest bestehend aus einem Ventilgehäuse und einem darin längsverfahrbar geführten Ventilschieber, der einzelne Fluidanschlussstellen im Ventilgehäuse ansteuert, wie mindestens einen
- Druckversorgungsanschluss,
- Rücklaufanschluss, und
- mehrere Nutzanschlüsse,
die dem Anschließen von hydraulischen Verbrauchern, wie Federungszylindern, dienen, wobei alle Anschlüsse nach einem vorgebbaren Verteilungsplan im Ventilgehäuse angeordnet sind. Die Erfindung betrifft des Weiteren eine Federungsvorrichtung, insbesondere für Fahrzeuge, wie verfahrbare Arbeitsmaschinen, mit mindestens einem Federungszylinder und einem erfindungsgemäßen Ventil.

Durch DE 10 2016 011 860 A1 ist ein Ventil mit einem Ventilgehäuse bekannt, das mindestens einen Nutzanschluss, einen Druckversorgungsanschluss und einen Rücklaufanschluss aufweist und in dem zum Ansteuern dieser einzelnen Anschlüsse längsverfahrbar ein Steuer- oder Ventilschieber geführt ist, wobei der am Druckversorgungsanschluss anstehende Versorgungsdruck zum Ansteuern eines an den jeweiligen Nutzanschluss angeschlossenen Verbrauchers über eine Blendeneinrichtung und einem Steuerkanal auf zumindest eine Ansteuerseite des Steuerschiebers geführt ist, die in einem Ansteuerraum im Ventilgehäuse verfahrbar angeordnet ist, der über eine weitere Blendeneinrichtung an den Rücklaufanschluss angeschlossen ist. Hierdurch wird zur Dämpfung nicht wie üblich der LS-Druck verwendet, sondern der am Druckversorgungsanschluss des Ventils anstehende Versorgungsdruck, damit ein hydraulisch dem Ventil vorgeschaltetes Regelglied in Form einer Druckwaage von der Dämpfung nicht nachteilig beeinflusst wird. Dergestalt ist die bekannte Ventillösung besonders geeignet schwingungsanfällige hydraulische Verbraucher anzusteuern, wie beispielsweise Drehwerke für Kran- oder Baggeraufbauten bei mobilen Arbeitsmaschinen.

Durch DE 10 2005 062 246 A1 ist eine hydropneumatische Achsfederung für Fahrzeuge bekannt, insbesondere für deren jeweilige Vorderachse, die mit mindestens einem Federungszylinder zusammenwirkt, der sowohl mit seiner Ringseite als auch mit seiner Kolbenseite an einen Hydrospeicher angeschlossen ist, der mittels einer ihm zuordenbaren Ventileinheit von einer Steuerelektronik ansteuerbar ist, wobei die Ringseite des Federungszylinders an einen Druckwertaufnehmer angeschlossen ist, der seine Druckmesswerte an die Steuerelektronik weitergibt und ferner ist der ringseitige Druckwertaufnehmer an die Ausgangsseite der Ventileinheit angeschlossen, die der Ringseite des Federungszylinders zuordenbar ist. Die eigentliche Ansteuerung geschieht dergestalt in kostengünstiger Weise mittels Einsatz handelsüblicher 2/2-Wege-Ventile, die in hohem Maße als funktionssicher gelten.

Durch DE 10 2004 040 636 A1 ist eine Federungsvorrichtung bekannt, insbesondere für Fahrzeuge mit sich ändernden Lastverhältnissen, mit
- mindestens einem Federungszylinder, der jeweils Druckräume wie einen Ringraum und einen Kolbenraum aufweist,
- einem Load-Sensing-System zur Druckerzeugung,
- zwei Hauptzweige bildenden Versorgungsleitungen zwischen diesen Räumen und einem Pumpen- sowie einem Tankanschluss, wobei in jeden Hauptzweig ein Ventil geschaltet ist, von denen mindestens ein Ventil ein Druckregelventil ist, über das die Druckeinstellung für den jeweiligen vorgebbaren Druckraum des jeweiligen Federungszylinders erfolgt, und
- einer Niveauregulierung, wobei
- zusätzlich zu der Druckeinstellung die Niveauregulierung mittels dieses Druckregelventiles erfolgt, und
- hierfür das Druckregelventil mittels einer Steuereinrichtung elektrisch ansteuerbar ist.

Hierdurch ist es nicht mehr notwendig für die eigentliche Niveauregulierung zusätzliche Schaltventile zu verwenden, was den Herstellaufwand reduziert und somit Kosten sparen hilft. Da keine weiteren Schaltventile zum Einsatz kommen, ist darüber hinaus der Wartungsaufwand und die Möglichkeit von Fehlerquellen reduziert.

Ausgehend von diesem Stand der Technik liegt der Erfindung die Aufgabe zugrunde ein Ventil nebst zugehöriger Federungsvorrichtung zu schaffen, welche die bekannten Lösungen weiter verbessern, insbesondere mit einem reduzierten Ventilaufwand in kostengünstiger Weise eine Vielzahl von einander verschiedenen Federungsfunktionen ermöglichen.

Eine dahingehende Aufgabe löst ein Ventil mit den Merkmalen des Patentanspruches 1 in seiner Gesamtheit sowie eine Federungsvorrichtung mit den Merkmalen des Patentanspruches 10.

Dadurch, dass gemäß dem kennzeichnenden Teil des Patentanspruches 1 der Verteilungsplan im Ventilgehäuse vorsieht, dass zwischen
- einem ersten Druckversorgungsanschluss P1 und einem benachbart angeordneten Rücklaufanschluss T1 ein erster Nutzanschluss R1,
- dem ersten Druckversorgungsanschluss P1 und einem weiteren Druckversorgungsanschluss P2 ein zweiter Nutzanschluss R2, und
- dem zweiten Druckversorgungsanschluss P2 und einem weiteren benachbart angeordneten Rücklaufanschluss T2 der erste Nutzanschluss R1 vorhanden ist,
ist dem Grunde nach mit nur einem einzelnen Ventil als Entität eine Vielzahl von Federungsfunktionen realisierbar. Da nur ein einzelnes Ventil als zentrale Steuereinrichtung benötigt wird, ist der Herstellaufwand reduziert, was zu einer Kostenersparnis führt; auch weil im Hinblick auf die reduzierte Anzahl von benötigten Ventilen, wie Schaltventilen, gegenüber dem genannten Stand der Technik ein hohes Maß an Ausfallsicherheit erreicht ist und demgemäß nur ein geringer Wartungsaufwand entsteht. Auch ist das Ventil eigenstabil konzipiert, so dass es im Betrieb nicht ungewollt zu Schwingungen kommen kann, die das Ansteuerverhalten beeinträchtigen könnten. Dabei dienen die beiden Nutzanschlüsse dem Anschließen und Versorgen mindestens eines Federungs- und/oder Dämpfungszylinders, vorzugsweise von mehreren Federungs- und/oder Dämpfungszylindern, mit Fluid vorgebbaren Druckes, das von einzelnen Federungs- und/oder Dämpfungsspeichern, insbesondere Hydrospeichern bereitgestellt wird, die an die Druckversorgungsanschlüsse im Ventilgehäuse fluid- oder medienführend anschließbar sind. Der Einfachheit halber wird im Folgenden überwiegend nur noch von Federungszylindern und Federungs- oder Hydrospeichern gesprochen. Die Rücklaufanschlüsse sind als Tankanschlüsse im Ventilgehäuse konzipiert, von denen zumindest einer eine Fluidverbindung zu einem Fluid-Vorratstank herstellt. In jedem Fall ist der Nutzanschluss R1 zweimal vergeben, und zwar rechts und links des jeweils benachbarten Druckversorgungsanschlusses P2 bzw. P1.

Mit dem erfindungsgemäßen Ventil ist es bevorzugt möglich, dass je nach Schieberstellung im Ventilgehäuse
- eine freigegebene Federung,
- eine gedämpfte Federung,
- ein Sperren der Federung,
- eine gedämpfte Wankstabilisierung, und
- eine freigegebene Wankstabilisierung
ermöglicht ist. Dergestalt sind in einem Hauptsteuerblock mit nur einem darin integrierten Ventil eine Vielzahl verschiedener Federungsfunktionen nebst einer Wankstabilisierung zusammengefasst. Dergestalt lässt sich das Ventil respektive der Hauptsteuerblock platzsparend an verfahrbaren Arbeitsmaschinen einschließlich Lastkraftwagen unterbringen, bei gleichzeitig reduziertem Einsatzgewicht. Dies spielt insbesondere dann eine Rolle, wenn fahrbare Arbeitsmaschinen, wie Lastkraftwagen, auf Batteriebetrieb umgestellt werden und die Batterie entsprechend viel Einbauraum an der Arbeitsmaschine benötigt und im Übrigen auch schwer ist.

Bei einer bevorzugten Ausführungsform des erfindungsgemäßen Ventiles ist vorgesehen, dass für eine freigegebene Federung der Ventilschieber im Ventilgehäuse Stellungen einnimmt, bei denen die Fluidverbindung zwischen
- dem ersten Nutzanschluss R1 und dem einen Druckversorgungsanschluss P1 sowie
- dem zweiten Nutzanschluss R2 und dem zweiten Druckversorgungsanschluss P2 freigegeben, und
- dem ersten Nutzanschluss R1 und dem zweiten Druckversorgungsanschluss P2 sowie
- dem zweiten Nutzanschluss R2 und dem ersten Druckversorgungsanschluss P1 gesperrt ist.

Dergestalt sind schnelle Einregelvorgänge für die Federung ermöglicht. Hierfür sind die an den jeweiligen Druckversorgungsanschlüssen angeschlossenen Federungs- oder Hydrospeicher mit den Nutzanschlüssen der Federungszylinder zum Herstellen einer Komplettfederung verbunden.

Bei einer weiteren bevorzugten Ausführungsform des erfindungsgemäßen Ventils ist vorgesehen, dass für eine gedämpfte Federung der Ventilschieber im Ventilgehäuse Stellungen einnimmt, bei denen die Fluidverbindung zwischen
- dem ersten Nutzanschluss R1 und dem ersten Druckversorgungsanschluss P1 sowie
- dem zweiten Nutzanschluss R2 und dem zweiten Druckversorgungsanschluss P2 gedämpft erfolgt, und
- dem ersten Nutzanschluss R1 und dem zweiten Druckversorgungsanschluss P2 sowie
dem zweiten Nutzanschluss R2 und dem ersten Druckversorgungsanschluss P1 gesperrt ist.

Dergestalt ist eine Blenden- oder Drosselfunktion realisiert, die als jeweiliges Stromventil den Mengenstrom des Fluids reguliert und dergestalt die Realisierung einer gedämpften Federung respektive Dämpfung ermöglicht. Für die Realisierung der Blenden- oder Drosselfunktion ist der jeweils zuordenbare Fluidstrom über einen veränderlichen Öffnungsquerschnitt geführt, dessen Größe von der jeweiligen Stellung des Ventilschiebers abhängt. Vorzugsweise ist dabei der variierende Öffnungsquerschnitt durch einzelne Steuernuten am Außenumfang des Steuerschiebers mit realisiert.

Bei einer weiteren bevorzugten Ausführungsform des erfindungsgemäßen Ventils ist vorgesehen, dass für ein Sperren der Federung in einer Zwischenstellung der Ventilschieber im Ventilgehäuse Stellungen einnimmt, bei denen die Fluidverbindungen zwischen allen Druckversorgungsanschlüssen P1, P2 und alle Nutzanschlüssen R1, R2 gesperrt ist. Dergestalt ist die Federung in einer verriegelten Stellung und mithin in der sogenannten "harten" Stellung gehalten. Dergestalt kann beispielsweise eine dahingehend arretierte Baggerschaufel gezielt Lade- oder Schüttgut aufnehmen und verfahren, ohne dass es ungewollt zu Einfederungsvorgängen an der zugehörigen Arbeitsmaschine kommt.

Bei einer weiteren bevorzugten Ausführungsform des erfindungsgemäßen Ventils ist vorgesehen, dass für eine gedämpfte Wankstabilisierung der Ventilschieber im Ventilgehäuse Stellungen einnimmt, bei denen die Fluidverbindung zwischen
- dem zweiten Nutzanschluss R2 und dem ersten Druckversorgungsanschluss P1 sowie
- dem ersten Nutzanschluss R1 und dem zweiten Druckversorgungsanschluss P2 gedämpft erfolgt, und
- dem ersten Nutzanschluss R1 und dem ersten Druckversorgungsanschluss P1 sowie
- dem zweiten Nutzanschluss R2 und dem zweiten Druckversorgungsanschluss P2 gesperrt ist.

Dergestalt kreuzen sich die Fluidwege innerhalb des erfindungsgemäßen Ventils gegenüber der vorstehend beschriebenen, freigegebenen Federung und für die Dämpfung der Wankstabilisierung sind am Ventilschieber außenumfangsseitig die entsprechenden Steuernuten eingebracht, die die Größe der freien Öffnungsquerschnitte zwischen Ventilschieber und Ventilgehäuse in diesen Fluidbereichen vorgeben.

Bei einer weiteren bevorzugten Ausführungsform ist vorgesehen, dass für eine freigegebene Wankstabilisierung der Ventilschieber im Ventilgehäuse Stellungen einnimmt, bei denen die Fluidverbindung zwischen
- dem zweiten Nutzanschluss R2 und dem ersten Druckversorgungsanschluss P1 sowie
- dem ersten Nutzanschluss R1 und dem zweiten Druckversorgungsanschluss P2 freigegeben ist, und
- dem ersten Nutzanschluss R1 und dem ersten Druckversorgungsanschluss P1 sowie
- dem zweiten Nutzanschluss R2 und dem zweiten Druckversorgungsanschluss P2 gesperrt ist.

Bei der dahingehenden Ventilkonstellation entfällt die Dämpfung über die Steuernuten im Ventilschieber, so dass insoweit bei voll geöffneter Stellung des Ventilschiebers und vollständig freigegebener Fluidführung im Ventilgehäuse die Wankstabilisierung voll einsetzen kann.

Bei einer weiteren bevorzugten Ausführungsform des erfindungsgemäßen Ventils ist vorgesehen, dass der Ventilschieber einen Verbindungskanal aufweist, der die beiden Rücklaufanschlüsse T1 und T2 miteinander verbindet. Dergestalt braucht nur einer der beiden Rücklaufanschlüsse T1 oder T2 mit einem Fluidvorratsspeicher, wie einem Tank, direkt verbunden zu werden, was Platz sparen hilft und Kosten senkt, indem nicht weitere zusätzliche Bohrungen in das Ventilgehäuse für den weiteren Rücklaufanschluss T2 bzw. T1 einzubringen sind.

Bei einer weiteren besonders bevorzugten Ausführungsform des erfindungsgemäßen Ventils ist vorgesehen, dass der Ventilschieber auf zumindest einer Seite mittels eines Stangentriebes bewegt ist, der von einer Steuerung ansteuerbar ist. Dergestalt lässt sich hemmnis- und ruckfrei der Ventilschieber in beide gegenläufigen Verfahrrichtungen ansteuern. Dabei kann die Ansteuerung des Ventilschiebers hydraulisch erfolgen, wie beispielsweise in DE 10 2016 011 860 A1 aufgezeigt oder unter Einsatz eines Elektromotors über einen Zahnstangentrieb, wie beispielhaft in DE 10 2015 001 883 A1 aufgezeigt.

Gegenstand der Erfindung ist auch eine Federungsvorrichtung, insbesondere für Fahrzeuge wie verfahrbare Arbeitsmaschinen, mit mindestens einem Federungszylinder und einem Ventil wie vorstehend angegeben, die dazu dient, neben einer Federung eine Wankstabilisierung für den jeweiligen Federungszylinder zu ermöglichen, in dem der jeweilige Federungszylinder mit einzelnen, zuordenbaren Hydrospeichern in fluidführende Verbindung kommt, die vorzugsweise voneinander räumlich und fluidisch getrennt mit den Druckversorgungsanschlüssen P1 und P2 des Ventils in Verbindung bringbar sind. Dergestalt ist eine Art geschlossene Kreislaufführung für die Federungsvorrichtung erreicht, die einen besonders energetisch günstigen Betrieb ermöglicht.

Im Folgenden wird das erfindungsgemäße Ventil mit Federungsvorrichtung anhand eines Ausführungsbeispiels nach der Zeichnung näher erläutert.

Dabei zeigen in prinzipieller und nicht maßstäblicher Darstellung die
- Figur 1: in der Art eines hydraulischen Schaltplanes die wesentlichen Funktionskomponenten einer Federungsvorrichtung unter Einbezug eines Ventils für verschiedene Federungsfunktionen einschließlich einer Wankstabilisierung; und
- Figuren 2 bis 6: das in Figur 1 eingesetzte Ventil in einer Längsschnittdarstellung und darunter angeordnet und jeweils mit a und derselben Nummer bezeichnet eine zugehörige vereinfachte Schaltplandarstellung.

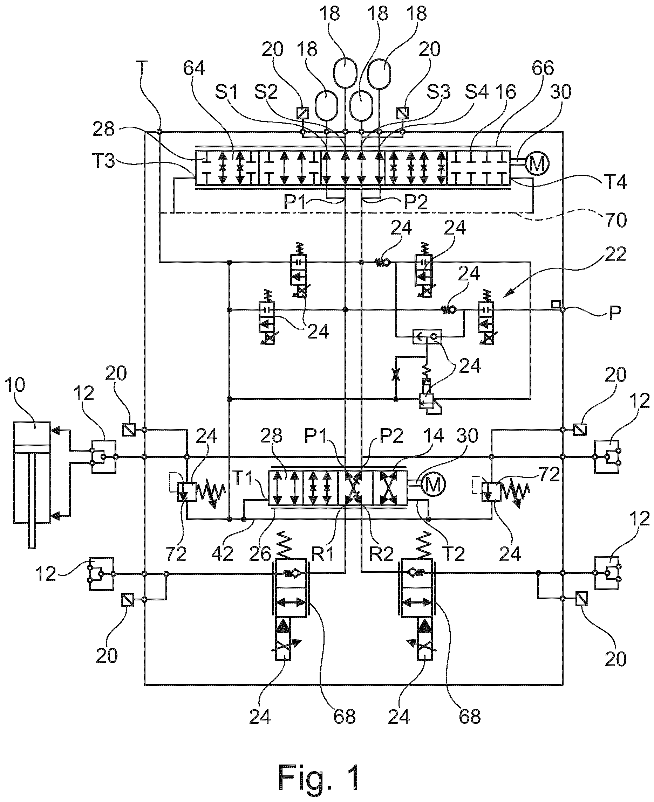

Der in Figur 1 gezeigte hydraulische Schaltplan ist in der Art einer geschlossenen hydraulischen Kreislaufführung ausgeführt mit einem zentralen Druckversorgungsanschluss P und einem zentralen Tankrücklaufanschluss T. Über den Druckversorgungsanschluss P lässt sich in üblicher Weise ein Hydraulikmedium unter vorgebbarem Fluiddruck einbringen, das mittels einer Hydropumpe (nicht dargestellt) bereitgestellt wird, welche das Hydraulikmedium aus einem Vorratstank (nicht dargestellt) entnimmt, in den über den Tankrücklaufanschluss T Hydraulikmedium aus dem gezeigten hydraulischen Arbeitskreis auch wieder ausgespeist werden kann. Der in Figur 1 gezeigte hydraulische Kreislauf ist insoweit Bestandteil einer Federungsvorrichtung, insbesondere für Fahrzeuge, wie verfahrbare Arbeitsmaschinen mit einzelnen Federungszylindern 10, von denen exemplarisch und der einfacheren Darstellung wegen in der Figur 1 nur ein Exemplar auf der linken Seite wiedergegeben ist. Der jeweilige Federungszylinder 10 ist in üblicher Weise über eine zugehörige Anschlussstelle 12 sowohl auf der Kolbenseite als auch auf der Stangenseite an den hydraulischen Kreislauf für eine sinnfällige Fluidversorgung angeschlossen. Ferner wirkt der Federungszylinder 10 mit nicht dargestellten Radsätzen eines Fahrzeuges zusammen, wobei ein solcher Radsatz auch nur ein einzelnes Rad aufweisen kann. Es versteht sich, dass solche Federungs- oder Dämpfungszylinder 10 auch für andere Anwendungen außerhalb von fahrbaren Arbeitsmaschinen eingesetzt werden können, beispielsweise im Rahmen von Fahrwerken für Flugzeuge etc.

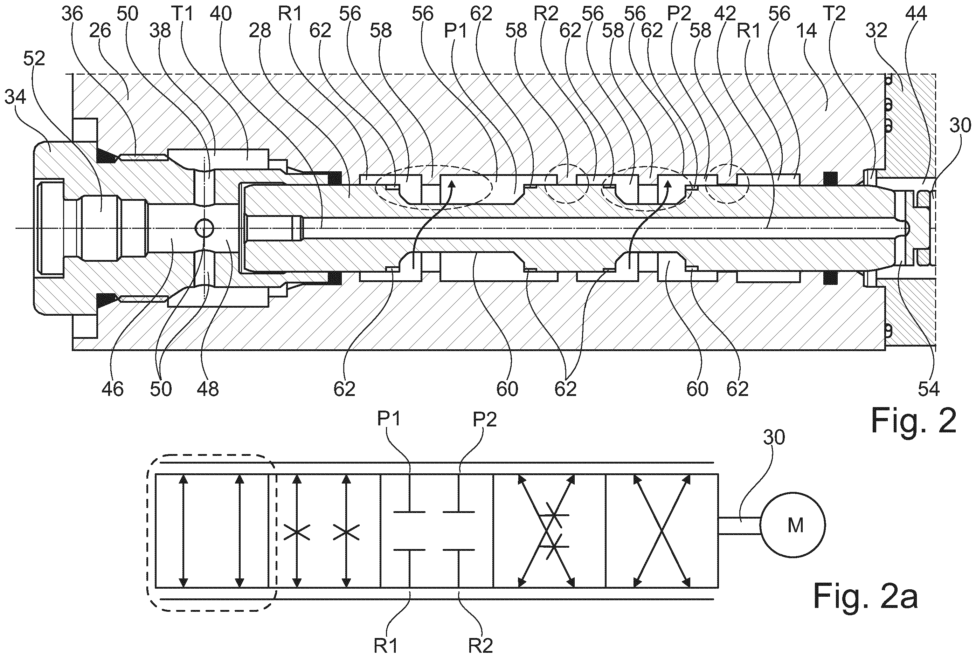

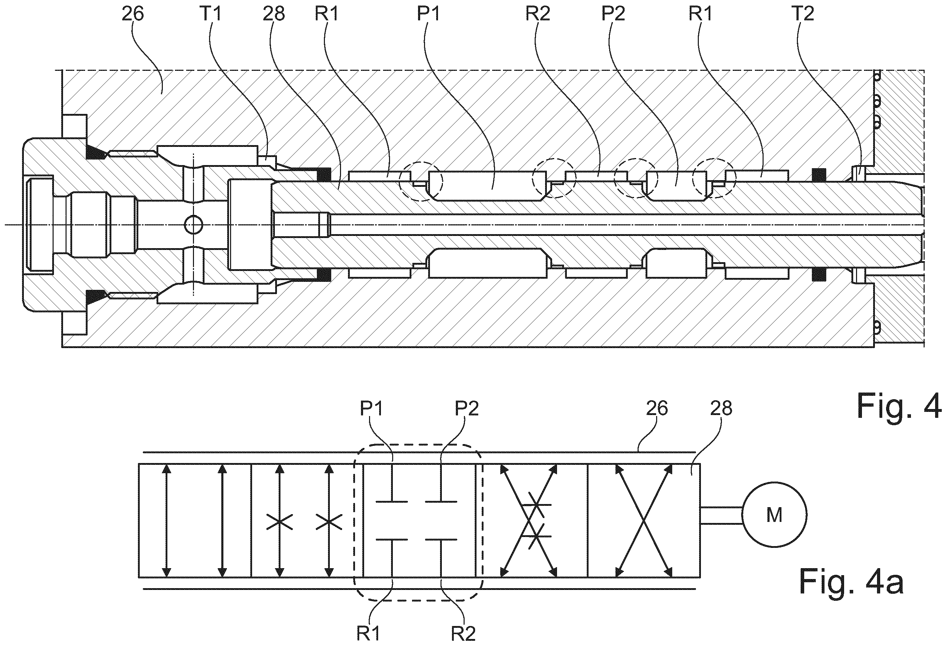

Insbesondere weist der hydraulische Versorgungskreislauf ein erstes erfindungsgemäßes Ventil 14, wie es exemplarisch in den Figuren 2 bis 6 dargestellt ist sowie ein zweites Ventil 16 auf, das sinnfällig mit dem ersten Ventil 14 zusammenwirkt. Beide Ventile 14, 16 sind in der Art von Proportionalventilen ausgebildet und werden mittels eines Elektromotors M angesteuert unter Verwendung eines Zahnstangenantriebes, wie dies beispielhaft in DE 10 2015 001 883 A1 aufgezeigt ist. Zum Einsatz als Federungsvorrichtung ist der hydraulische Kreislauf mit einzelnen Hydrospeichern 18 ausgestattet, die die Federungs- und/oder Dämpfungscharakteristik für jeden Federungszylinder 10 mit vorgeben. Des Weiteren verfügt der hydraulische Kreislauf über eine Vielzahl von Sensoren 20, wie beispielsweise Druckerfassungseinrichtungen. Neben den bereits genannten Ventilen 14, 16 ist darüber hinaus eine zentrale Ventilsteuerung 22 mit mehreren Einzelventilen 24 vorhanden, die auf übliche und daher nicht mehr näher beschriebene Art und Weise zum Ansteuern der Federungsvorrichtung als Ganzes dienen. Das zweite Ventil 16 ist nicht zwingend notwendig, erlaubt aber eine Vielzahl von weiteren Federungsfunktionen für die Federungsvorrichtung als Ganzes. Wichtig ist, dass die Hydrospeicher 18 jedenfalls mit ihrer Flüssigkeitsseite unter Vorspannung eines Gasdruckes auf der Gasseite über die Druckversorgungsanschlüsse P1 und P2 in Wirkverbindung mit dem erfindungsgemäßen Ventil 14 stehen. Dieses ist gemäß der Darstellung nach der Figur 1 der Einfachheit halber in vier möglichen Funktionspositionen wiedergegeben und die Sperrstellung, wie insbesondere in den Figuren 4 und 4a wiedergegeben, wurde der Einfachheit halber weggelassen.

Wie insbesondere die Figur 2 zeigt, weist das erste erfindungsgemäße Ventil 14 ein Ventilgehäuse 26 auf, in dem längsverfahrbar ein Ventilschieber 28 geführt ist, der über den nicht näher dargestellten Zahnstangentrieb 30 (Figur 1) von dem zugehörigen Elektromotor M gegenläufig hin und her verfahren werden kann, für eine sinnfällige Verbindung oder Unterbrechung einzelner Fluidführungen zwischen Fluidanschlussstellen, worauf im Folgenden noch näher eingegangen wird. Das Ventilgehäuse 26 ist auf seiner einen Seite von Teilen eines Antriebs- oder Motorgehäuses 32 verschlossen, welches den Zahnstangentrieb 30 führt. Auf der gegenüberliegenden Seite ist das Ventilgehäuse 26 von einem Abschlussteil 34 gegenüber der Umgebung mediendicht abgeschlossen, wobei das Abschlussteil 34 in der Art einer Einschraubpatrone über eine Gewindestrecke 36 in eine zugehörige Aufnahme 38 im Ventilgehäuse 26 eingesetzt respektive eingeschraubt ist. Der Ventilschieber 28 ist in seiner Längs- oder Verschiebeachse 40 von einem zentralen Verbindungskanal 42 durchgriffen, der permanent zwei gegenüberliegende Rücklaufanschlüsse T1 und T2 fluid- oder medienführend miteinander verbindet, und der in die Aufnahme 38 im Ventilgehäuse 26 einmündet bzw. in einen Stangenraum 44 als Teil des Motorgehäuses 22 sowie des sich anschließenden Ventilgehäuses 26 mit dem Ventilschieber 28 in diesem Anschlussbereich.

Wie sich insbesondere aus der Figur 1 ergibt, sind die beiden Rücklaufanschlüsse T1 und T2 über entsprechende Verbindungsleitungen an den zentralen Rücklaufanschluss T permanent angeschlossen. In Blickrichtung auf die Figur 2 gesehen, befindet sich der Ventilschieber 28 in seiner linken Maximalstellung, die auch die Anschlagstellung sein kann, gegenüber dem Abschlussteil 34 und der Verbindungskanal 42 mündet in eine Kanalführung 46 aus, gebildet aus einem Längskanal 48 und mehreren Querkanälen 50, die paarweise einander gegenüberliegend und senkrecht auf dem Längskanal 48 stehend das Abschlussteil 34 durchgreifen und endseitig in den Raum der Aufnahme 38 ausmünden. Zum Verschließen des Längskanals 48 der Kanalführung 46 gegenüber der Umgebung dient eine zusätzliche Einsatzschraube 52, die mittig in das Abschlussteil 34 in entsprechend abgedichteter Weise eingeschraubt ist. Am anderen Ende mündet der Verbindungskanal 42 in einen Querkanalabschnitt 54 im Ventilschieber 28 aus, der wiederum in den Stangenraum 44 endseitig eintritt, an dem der Rücklaufanschluss T2 permanent fluidführend angeschlossen ist.

Der Ventilschieber 28 begrenzt darüber hinaus mit dem Ventilgehäuse 26 in üblicher Weise ringförmige Kanalabschnitte 56, die in ihrem freien Durchmesser gegenüber dem Außendurchmesser des Ventilschiebers 28 vergrößert sind. Die Kanalabschnitte 56 im Ventilgehäuse 26 sind in Hintereinanderanordnung von Querstegen 58 zumindest teilweise separiert, die über die Kanalabschnitte 56 randseitig nach innen gesehen vorstehen. Des Weiteren weist der Ventilschieber 28 außenumfangsseitig ringförmige Ausnehmungen 60 auf, welche einer verbesserten Fluidführung dienen. Insgesamt sind fünf Kanalabschnitte 56 vorgesehen sowie vier Querstege 58 und zwei in Längsrichtung sich erstreckende Ausnehmungen 60 im Ventilschieber 28. Des Weiteren sind im Ventilschieber 28 außenumfangsseitig einzelne Steuernuten 62 eingebracht, die der Führung des Fluidstroms zwischen zwei benachbarten Kanalabschnitten 56 und Ausnehmungen 60 in diesem Bereich dienen und je nach Verschiebestellung des Ventilschiebers 28 in androsselnder Weise einen Fluidstrom zusehends freigeben oder sperren können. Es können mehrere Steuernuten 62 am Außenumfang des Ventilschiebers 28 eingeordnet sein, wobei die jeweilige Steuernut 62 mit ihrem freien stirnseitigen Öffnungsquerschnitt in Richtung eines ringförmigen Kanalabschnittes 56 mit dem jeweiligen Druckversorgungsanschluss P1 und P2 ausmündet sowie in Richtung der Nutzanschlüsse R1 und R2. Somit ist jede Ausnehmung 60 im Ventilschieber 28 randseitig von Steuernuten 62 begrenzt. Die einzelnen, gleichmäßig radial voneinander beabstandeten Steuernuten 62 dienen der Führung des Fluidstroms zwischen benachbarten Kanalabschnitten 56 und Ausnehmungen 60 in diesem Bereich und je nach Verschiebestellung des Ventilschiebers 28 können diese in androsselnder Weise einen Fluidstrom zusehends freigeben oder sperren. Wie bereits dargelegt, können mehrere Steuernuten 62 am Außenumfang eines Steuersegmentes des Ventilschiebers 28 angeordnet sein, wobei die jeweilige Steuernut 62 mit ihrem freien stirnseitigen Öffnungsquerschnitt in Richtung eines ringförmigen benachbarten Kanalabschnittes 56 mit den Anschlüssen P1, P2, R1 und R2 ausmündet.

Neben den beiden Druckversorgungsanschlüssen P1 und P2, die in Wirkverbindung mit dem jeweiligen Hydrospeicher 30 stehen, verfügt das Ventilgehäuse 26 weiter über die beiden Nutzanschlüsse R1 und R2, die gemäß der Darstellung nach der Figur 1 in Fluidverbindung mit dem jeweiligen Federungszylinder 10 bringbar sind.

Ausgehend von Vorstehendem wird nunmehr die Funktion des erfindungsgemäßen ersten Ventiles 14 ebenso erläutert, wie auch das Zusammenwirken mit dem zweiten Ventil 16. Wie insbesondere die Figuren2 bis 6 zeigen, sind die einzelnen Anschlüsse nach einem vorgebbaren Verteilungsplan im Ventilgehäuse 26 angeordnet, wobei in dem Ventil 14 zwischen
- einem ersten Druckversorgungsanschluss P1 und einem benachbart angeordneten Rücklaufanschluss T1 ein erster Nutzanschluss R1,
- dem ersten Druckversorgungsanschluss P1 und einem weiteren Druckversorgungsanschluss P2 ein zweiter Nutzanschluss R2, und
- dem zweiten Druckversorgungsanschluss P2 und einem weiteren benachbart angeordneten Rücklaufanschluss T2 der erste Nutzanschluss R1 vorhanden ist.

Bei der ersten Schieberstellung nach den Figuren 2 und 2a wird mit der gezeigten Federungsvorrichtung eine freigegebene oder offene Federung verwirklicht. Hierfür nimmt der Ventilschieber 28 im Ventilgehäuse 26 Stellungen ein, bei dem die Fluidverbindung zwischen
- dem ersten Nutzanschluss R1 und dem einen Druckversorgungsanschluss P1 sowie
- dem zweiten Nutzanschluss R2 und dem zweiten Druckversorgungsanschluss P2 freigegeben, und
- dem ersten Nutzanschluss R1 und dem zweiten Druckversorgungsanschluss P2 sowie
- dem zweiten Nutzanschluss R2 und dem ersten Druckversorgungsanschluss P1 gesperrt ist.

In der dahingehenden Ventilstellung befindet sich in Blickrichtung auf die Figur 2 gesehen der Ventilschieber 28 ganz links und in einer Anschlagposition oder einer vorgebbaren maximalen Auslenkstellung gegenüber dem Abschlussteil 34 am Ende des Ventilgehäuses 26. Die daraus sich ergebenen Fluidströme sind in Figur 2 mittels Pfeildarstellung wiedergegeben, wobei hier die Steuernuten 62 nicht in Wirkverbindung mit dem jeweils benachbarten ringförmigen Quersteg 58 sind. Die in Figur 2 gezeigte Ventilstellung ist in Figur 2a in symbolisierter Darstellung wiedergegeben und betrifft das ganz links dargestellte, umrandete Schaltsymbol. Ferner sind in der Figur 2 und in den folgenden Figuren die gesperrten und teilweise freigegebenen Fluidverbindungen der besseren Übersichtlichkeit wegen mit strichlinierten Kreisen und in Ellipsenform wiedergegeben.

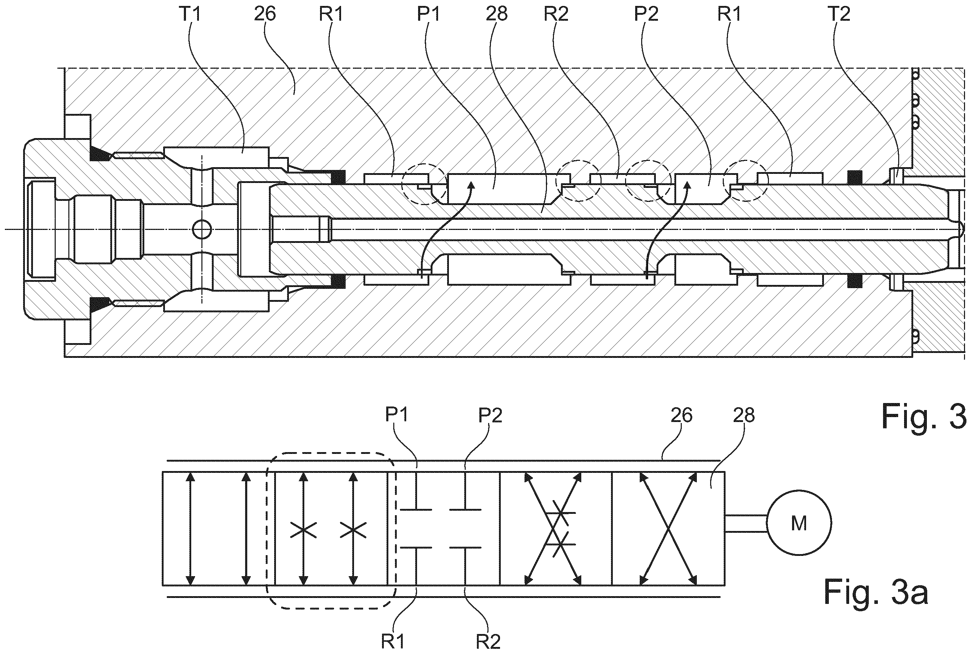

Die folgenden Figuren 3 bis 6a betreffen dieselbe Ventillösung 14 wie in den Figuren 2, 2a dargestellt, mit der Maßgabe, dass unterschiedliche weitere Ventilstellungen gezeigt sind mit unterschiedlichen Ventilfunktionen einschließlich mindestens einer Wankfunktion, die in jedem Fall für einen Einfluss auf die jeweils angestrebte Federungseigenschaft sorgen.

So betreffen die Figuren 3, 3a eine gedämpfte Federung, bei der der Ventilschieber 28 im Ventilgehäuse 26 Stellungen einnimmt, bei denen die Fluidverbindung zwischen
- dem ersten Nutzanschluss R1 und dem ersten Druckversorgungsanschluss P1 sowie
- dem zweiten Nutzanschluss R2 und dem zweiten Druckversorgungsanschluss P2 gedämpft erfolgt, und
- dem ersten Nutzanschluss R1 und dem zweiten Druckversorgungsanschluss P2 sowie
- dem zweiten Nutzanschluss R2 und dem ersten Druckversorgungsanschluss P1 gesperrt ist.

Auch dahingehend ist die jeweilige Fluidverbindung mit Pfeilen in Richtung der Durchströmung wiedergegeben und die Sperr- und Freigabestellungen respektive Dämpfungsstellungen sind wiederum der besseren Darstellung wegen mit strichlinierten Kreisen eingefasst. Durch die Androsselung des Fluidstroms über die Steuernuten 62 im Ventilschieber 28 kommt es in Zusammenwirken mit den ringförmigen nach innen vorstehenden Querstegen 58 zu einer Androsselung des jeweiligen Fluidstroms gemäß der Pfeildarstellung, so dass eine gedämpfte Federung für den jeweiligen Federungszylinder 10 erreicht ist. In der Symboldarstellung nach der Figur 3a ist die angedrosselte Ventilstellung wiederum kastenförmig umrahmt.

Die mittlere Ventilstellung nach den Figuren 4 und 4a ist in der Figur 1 der Einfachheit halber nicht gezeigt und betrifft ein Sperren der Federung. Für ein dahingehendes Sperren der Federung nimmt der Ventilschieber 28 im Ventilgehäuse 26 Stellungen ein, bei denen die Fluidverbindungen zwischen allen Druckversorgungsanschlüssen P1, P2 und allen Nutzanschlüssen R1, R2 gesperrt ist, indem der Ventilschieber 28 mit seinem unterbrechungsfreien Außenumfang die Innenseiten der Querstege 58 bündig überfährt. Bei einer dahingehenden Sperrung der Federung sind die Federungszylinder 10 mit ihrer jeweiligen Fluidsäule auf der Kolben- und auf der Stangenseite "eingespannt", so dass das zugehörige Fahrwerk der Arbeitsmaschine entsprechend arretiert ist. In dieser gesperrten Stellung kann eine Arbeitsgerätschaft einer Arbeitsmaschine, wie beispielsweise eine Baggerschaufel, Schüttgut aufnehmen und transportieren, ohne dass es dabei zu einem ungewollten Aufschwingen des Fahrwerkes der Arbeitsmaschine kommen kann.

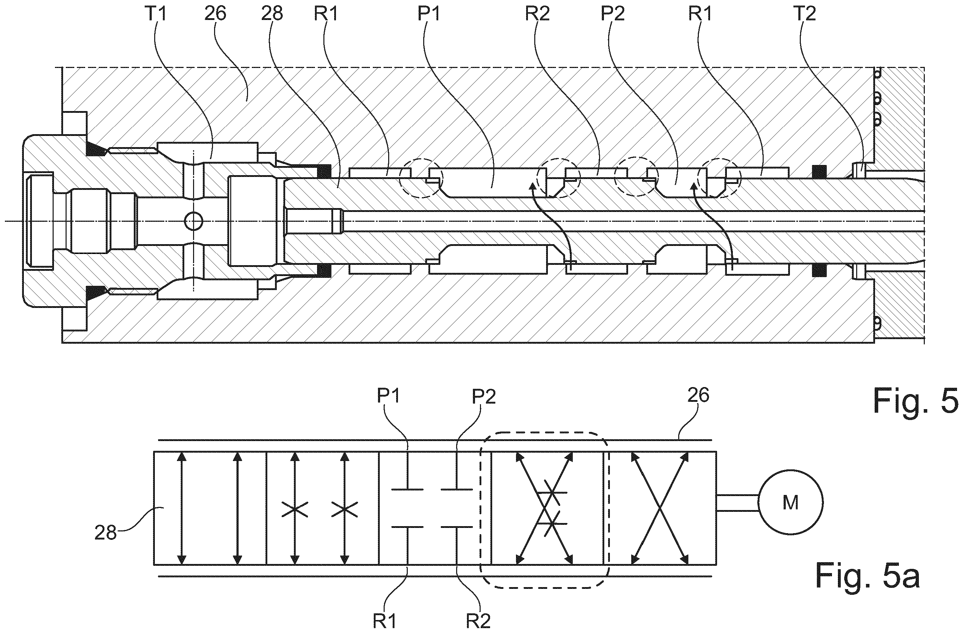

Die Figuren 5 und 5a betreffen eine Ventilfunktion, bei der für eine gedämpfte Wankstabilisierung der Federungsvorrichtung der Ventilschieber 28 im Ventilgehäuse 26 Stellungen einnimmt, bei denen die Fluidverbindung zwischen
- dem zweiten Nutzanschluss R2 und dem ersten Druckversorgungsanschluss P1 sowie
- dem ersten Nutzanschluss R1 und dem zweiten Druckversorgungsanschluss P2 gedämpft erfolgt, und
- dem ersten Nutzanschluss R1 und dem ersten Druckversorgungsanschluss P1 sowie
- dem zweiten Nutzanschluss R2 und dem zweiten Druckversorgungsanschluss P2 gesperrt ist.

Entgegen der Ausgangsstellung nach den Figuren 2 und 2a sind die Anschlüsse nunmehr gegenseitig vertauscht und mit einer Dämpfung versehen, wiederum realisiert über die einzelnen Steuernuten 62. Die vorstehend beschriebenen, gedämpften Fluidwege sind wiederum in der Figur 5 in Pfeildarstellung wiedergegeben und in der Figur 5a ist wiederum der dahingehende gedämpfte Wankstabilisierungsbereich mit einer Umrahmung symbolisch wiedergegeben.

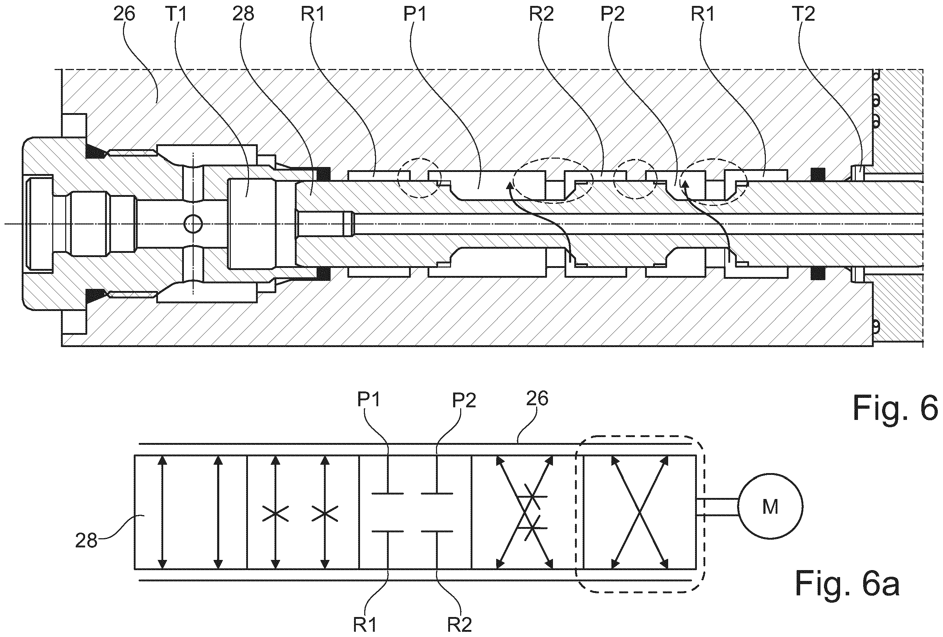

Die abschließende Darstellung nach den Figuren 6 und 6a betrifft nunmehr eine freigegebene oder offene Wankstabilisierung, bei der der Ventilschieber 28 im Ventilgehäuse 26 Stellungen einnimmt, bei dem die Fluidverbindung zwischen
- dem zweiten Nutzanschluss R2 und dem ersten Druckversorgungsanschluss P1 sowie
- dem ersten Nutzanschluss R1 und dem zweiten Druckversorgungsanschluss P2 freigegeben ist, und
- dem ersten Nutzanschluss R1 und dem ersten Druckversorgungsanschluss P1 sowie
- dem zweiten Nutzanschluss R2 und dem zweiten Druckversorgungsanschluss P2 gesperrt ist.

In der Figur 6 sind die dahingehenden Fluidströme wieder in Pfeildarstellung wiedergegeben und in Figur 6a betrifft die ganz rechte umrandete Symboldarstellung die dahingehend freigegebene, vollaktive Wankstabilisierung.

Zusammenfassend bleibt festzuhalten, dass mit nur einem erfindungsgemäßen Ventil 14 sich eine Vielzahl von Federungsfunktionen nebst Wankstabilisierung für eine Fahrzeugfederung mit einzelnen Federungszylindern 10 erreichen lässt, was für einen Durchschnittsfachmann auf dem Gebiet von Federungsvorrichtungen überraschend ist. Dies hat so keine Entsprechung im Stand der Technik.

Die Schaltplandarstellung nach der Figur1 weist ein weiteres zweites Ventil 16 auf, in Form eines Proportionalventiles, dessen Ventilkolben 64 längsverfahrbar in einem Ventilgehäuse 66 mit einzelnen Fluidanschlussstellen geführt ist. Vergleichbar dem ersten Ventil 14 ist auch der Ventilkolben 64 des zweiten Ventiles 16 mittels eines Zahnstangentriebes 30 unter Einsatz eines Elektromotors M in gegenläufige Richtungen bewegbar.

Das zweite Ventil 16 weist zwei Fluidanschlussstellen P1 und P2 auf, die mit den Fluidanschlussstellen P1 und P2 des ersten Ventils korrespondierend in fluidführender Verbindung stehen. Auf der gegenüberliegenden Seite weist das zweite Ventil 16 vier Speicheranschlüsse S1, S2, S3 und S4 auf, die permanent fluidführend mit dem jeweiligen Hydrospeicher 18 in Verbindung stehen. Des Weiteren weist das zweite Ventil 16 vergleichbar dem ersten Ventil 14 zwei Rücklaufanschlüsse T3 und T4 auf, die wiederum fluidführend über einen Verbindungskanal 70 miteinander in Verbindung stehen, der mittig den Ventilschieber 64 durchgreift.

Mit dem zweiten Ventil 16 lassen sich in Blickrichtung auf die Figur 1 von links nach rechts gesehen folgende Ventilfunktionen für jeden Federungszylinder 10 erreichen, nämlich
- eine adaptive gedämpfte Federung,
- eine adaptive, freigegebene Federung,
- eine Federung,
- ein Druckausgleich für die Federung nach Sperren, und
- ein Sperren der Federung.

Insbesondere in der mittleren Ventilstellung des zweiten Ventiles 16 sind je nach Verfahrstellung des ersten Ventiles 14 die Hydrospeicher 18 über die Speicheranschlüsse S1, S2, S3 und S4 in fluidführender Medienverbindung mit den Nutzanschlüssen R1 und R2 an die der jeweiligen Federungszylinder 10 angeschlossen ist.

Wie sich weiter aus der Darstellung nach der Figur 1 ergibt, ist die fluidführende Verbindung in Form des Verbindungskanales 42 für das erste Ventil 14 endseitig über jeweils ein Druckbegrenzungsventil 72 abgesichert, sowohl auf der einen Seite mit dem zentralen Druckversorgungsanschluss P als auch auf der anderen Seite mit dem zentralen Tankrücklaufanschluss T. Ferner ist zur Freigabe der beiden Nutzanschlüsse R1 und R2 in Richtung der Federungszylinder 10 jeweils ein ansteuerbares 2/2 Wege-Proportionalventil 68 vorgesehen. Die genannten Ventile 68 und 72 sind insoweit Einzelventile 24, die der Gesamtventilsteuerung 22 zugerechnet werden können. Ausgangsseitig sind jedenfalls die beiden Nutzanschlüsse R1 und R2 bei betätigten Proportionalventilen 68 in Fluidverbindung mit den jeweils zuordenbaren Anschlussstellen 12 an die die Federungszylinder 10 funktionsmäßig angeschlossen sind. Der ringseitige Anschluss des Federungszylinders 10 gehört an das Proportionalventil 24 und die Ausfederbewegung wird durch das zugehörige Proportionalventil 24 bedämpft.

Durch die Kombination beider Ventile 14, 16 in einem Hauptsteuerblock sind alle wesentlichen Federungs-, Dämpfungs- und Wankstabiliserungsfunktionen mit nur zwei Hauptkomponenten 14, 16 erreicht, wozu es im Stand der Technik bisher eine Vielzahl von einzelnen Ventilen erfordert hat mit entsprechend hohem Verrohrungs- und Steuerungsaufwand. Die aufgezeigte Lösung nach der Figur 1 ist sehr platz- und gewichtseinsparend, so dass sich die Federungsvorrichtung bevorzugt in Batteriefahrzeugen verbauen lässt, wo bereits die Batterie für sich gesehen ein sehr großes Gewicht und Einbauvolumen einnimmt.

## Patentansprüche

1. Ventil (14), zumindest bestehend aus einem Ventilgehäuse (26) und einem darin verfahrbar geführten Ventilschieber (28), der einzelne Fluidanschlussstellen im Ventilgehäuse (26) ansteuert, wie mindestens einen
- Druckversorgungsanschluss,
- Rücklaufanschluss, und
- mehrere Nutzanschlüsse, die dem Anschließen von hydraulischen Verbrauchern, wie Federungszylindern (10), dienen,
wobei alle Anschlüsse nach einem vorgebbaren Verteilungsplan im Ventilgehäuse (26) angeordnet sind, **dadurch gekennzeichnet, dass** zwischen
- einem ersten Druckversorgungsanschluss (P1) und einem benachbart angeordneten Rücklaufanschluss (T1) ein erster Nutzanschluss (R1),
- dem ersten Druckversorgungsanschluss (P1) und einem weiteren Druckversorgungsanschluss (P2) ein zweiter Nutzanschluss (R2), und
- dem zweiten Druckversorgungsanschluss (P2) und einem weiteren benachbart angeordneten Rücklaufanschluss (T2) der erste Nutzanschluss (R1) vorhanden ist.

2. Ventil nach Anspruch 1, **dadurch gekennzeichnet, dass** je nach Schieberstellung im Ventilgehäuse (26) für jeden Federungszylinder (10)
- eine freigegebene Federung,
- eine gedämpfte Federung,
- ein Sperren der Federung,
- eine gedämpfte Wankstabilisierung, und
- eine freigegebene Wankstabilisierung
ermöglicht ist.

3. Ventil nach Anspruch 1 oder 2, **dadurch gekennzeichnet, dass** für eine freigegebene Federung der Ventilschieber (28) im Ventilgehäuse (26) Stellungen einnimmt, bei denen die Fluidverbindung zwischen
- dem ersten Nutzanschluss (R1) und dem einen Druckversorgungsanschluss (P1) sowie
- dem zweiten Nutzanschluss (R2) und dem zweiten Druckversorgungsanschluss (P2) freigegeben, und
- dem ersten Nutzanschluss (R1) und dem zweiten Druckversorgungsanschluss (P2) sowie
- dem zweiten Nutzanschluss (R2) und dem ersten Druckversorgungsanschluss (P1) gesperrt ist.

4. Ventil nach einem der vorstehenden Ansprüche, **dadurch gekennzeichnet, dass** für eine gedämpfte Federung der Ventilschieber (28) im Ventilgehäuse (26) Stellungen einnimmt, bei denen die Fluidverbindung zwischen
- dem ersten Nutzanschluss (R1) und dem ersten Druckversorgungsanschluss (P1) sowie
- dem zweiten Nutzanschluss (R2) und dem zweiten Druckversorgungsanschluss (P2) gedämpft erfolgt, und
- dem ersten Nutzanschluss (R1) und dem zweiten Druckversorgungsanschluss (P2) sowie
- dem zweiten Nutzanschluss (R2) und dem ersten Druckversorgungsanschluss (P1) gesperrt ist.

5. Ventil nach einem der vorstehenden Ansprüche, **dadurch gekennzeichnet, dass** für ein Sperren der Federung in einer Zwischenstellung der Ventilschieber (28) im Ventilgehäuse (26) Stellungen einnimmt, bei denen die Fluidverbindungen zwischen allen Druckversorgungsanschlüssen (P1), (P2) und allen Nutzanschlüssen (R1), (R2) gesperrt ist.

6. Ventil nach einem der vorstehenden Ansprüche, **dadurch gekennzeichnet, dass** für eine gedämpfte Wankstabilisierung der Ventilschieber (28) im Ventilgehäuse (26) Stellungen einnimmt, bei denen die Fluidverbindung zwischen
- dem zweiten Nutzanschluss (R2) und dem ersten Druckversorgungsanschluss (P1) sowie
- dem ersten Nutzanschluss (R1) und dem zweiten Druckversorgungsanschluss (P2) gedämpft erfolgt, und
- dem ersten Nutzanschluss (R1) und dem ersten Druckversorgungsanschluss (P1) sowie
- dem zweiten Nutzanschluss (R2) und dem zweiten Druckversorgungsanschluss (P2) gesperrt ist.

7. Ventil nach einem der vorstehenden Ansprüche, **dadurch gekennzeichnet, dass** für eine freigegebene Wankstabilisierung der Ventilschieber (28) im Ventilgehäuse (26) Stellungen einnimmt, bei denen die Fluidverbindung zwischen
- dem zweiten Nutzanschluss (R2) und dem ersten Druckversorgungsanschluss (P1) sowie
- dem ersten Nutzanschluss (R1) und dem zweiten Druckversorgungsanschluss (P2) freigegeben ist, und
- dem ersten Nutzanschluss (R1) und dem ersten Druckversorgungsanschluss (P1) sowie
- dem zweiten Nutzanschluss (R2) und dem zweiten Druckversorgungsanschluss (P2) gesperrt ist.

8. Ventil nach einem der vorstehenden Ansprüche, **dadurch gekennzeichnet, dass** der Ventilschieber (28) einen Verbindungskanal (42) aufweist, der die beiden Rücklaufanschlüsse (T1) und (T2) miteinander verbindet.

9. Ventil nach einem der vorstehenden Ansprüche, **dadurch gekennzeichnet, dass** der Ventilschieber (28) auf zumindest einer Seite mittels eines Stangentriebes (30) bewegt ist, der von einer Steuerung ansteuerbar ist.

10. Federungsvorrichtung, insbesondere für Fahrzeuge wie verfahrbare Arbeitsmaschinen, mit mindestens einem Federungszylinder (10) und einem Ventil nach einem der vorstehenden Ansprüche, das dazu dient, neben einer Federung eine Wankstabilisierung für den jeweiligen Federungszylinder (10) zu ermöglichen.
